# EUROPEAN PATENT SPECIFICATION

(11) **EP 2 855 299 B1**
(45) Date of publication and mention of the grant of the patent: **10.05.2017**
(21) Application number: 12878175.4
(22) Date of filing: 30.05.2012
(51) Int. Cl.: B65D 61/00, B60P 7/12, B65D 85/20

(54) **METHOD AND APPARATUS FOR HANDLING CYLINDRICAL OBJECTS**
VERFAHREN UND VORRICHTUNG ZUR HANDHABUNG VON ZYLINDRISCHEN GEGENSTÄNDEN
PROCÉDÉ ET APPAREIL DE MANIPULATION D'OBJETS CYLINDRIQUES

(43) Date of publication of application: 08.04.2015
(73) Proprietor: Rissanen, Ahti, 87500 Kajaani (FI)
(72) Inventor: Rissanen, Ahti, 87500 Kajaani (FI)
(74) Representative: Pitkänen, Hannu Alpo Antero
(86) International application number: PCT/FI2012/050528
(87) International publication number: WO 2013/178866

(56) References cited:
- US-A- 4 685 846

## Description

The invention relates to a method and an apparatus for handling cylindrical objects. In the method on the sides of the cylindrical object frames are set in connection with which there are elastic tensioning and carrier means, and the tensioning and carrier means having been arranged in relation to the cylinder such that, when tensioning them by a sufficient force, the tensioning means pull the frames together. The apparatus includes frames set on the sides of the cylindrical object and elastic tensioning and carrier means tensioning these frames (2) into connection with the object, and the tensioning and carrier means are arranged to pass below the object. The invention particularly relates to lifting heavy cylindrical objects up from their base to a desired height and to their preparation for handling.

When transporting cylindrical objects, such as gas cylinders, a pallet turned upside down is often used in order for the cylinders not be able to roll uncontrollably. The gas cylinders are placed between the "legs" of the pallets and tied, if required, fast to the pallet by a suitable tying means. Larger numbers of gas cylinders are transported and stored in transport cages in the vertical position, whereby they rest on each other. Furthermore, gas cylinders can be placed on separate wall racks where they cannot fall. Gas cylinders and other cylindrical objects are also stored on various shelvings and platforms.

US2010001482A1 describes an arrangement in which a cylindrical object is pressed between jaws mounted on a prism-shaped framework to be stationary. The object in this arrangement does not rise from its base, whereby it is exposed to impacts conveyed via the framework.

US2002100707A1 depicts a device in which a cylindrical object is placed in saddle-like spaces in the frame and locked to the frame which is non-rotatable of its shape. This device is only suitable for objects the diameter of which is suitable for placing in saddle-like spaces.

US5097951A and RU229757C2 describe arrangements in which a cylinder is pressed between two planar plates by means of a tensioning device, thus creating a rigid non-rotatable unit. A problem of these devices is, inter alia, that their parts extend in the longitudinal direction outside the objects being handled, which increases their space requirement.

US 4685846 describe arrangements in which frames are positioned on the sides of the cylindrical object. There are also elastic tensioning and carrier means, which pull the frames together so that they are closely tensioned against the cylindrical object for forming a non-rotatable unit. The object in this arrangement does not rise from its base, whereby it is exposed to impacts conveyed via the framework.

A weakness of prior-art devices is their limited use for either storage or transport. Often, the devices are not suitable for both purposes and their construction is heavy and complex. A problem of prior-art devices is the difficulty of their detachment from the connection with the cylindrical object. The size of the devices is often large, whereby they require space in the storage and transport of cylindrical objects and when empty.

The object of the invention is to introduce a method and an apparatus which solve the above problems and eliminate the defects of prior art. Furthermore, the object of the invention is to introduce a reliable and safe mounting, transport, storage, lifting and/or height-adjustment method and an apparatus for implementing the method.

The object of the invention is achieved with a method and an apparatus which are characterised by what is presented in the claims.

In a method according to the invention, on the sides of a cylindrical object are set frames in connection with which there are elastic tensioning and carrier means which are arranged in relation to the cylinder such that, when tensioning by a sufficient force, the tensioning means pull the frames together and, at the same time, the cylinder rises by the tensioning and carrier means off its base and, when tensioning the tensioning and carrier means further, the frames on the sides of the cylinder are closely tensioned against the housing of the cylinder, thus creating a non-rotatable unit.

The handling method of cylindrical objects according to the invention enables the mounting, transport and storage of cylindrical objects as well as lifting them off their base and adjusting their height. Furthermore when employing the method according to the invention, the transport of objects is safe both in the horizontal and vertical position, because the object being transported cannot move or roll during transport. The method can also be applied for heavy rolls in manufacturing, when it is not necessarily advantageous to lift the roll off its base but only to prevent its uncontrollable rolling or other motion in connection with transport.

The method enables by gradually tensioning the tensioning elements to adjust the height of the object steplessly. The method can also be utilised in positioning two cylinders in relation to each other e.g. when welding heavy district-heating or gas pipes against each other. Particularly, the invention can be used when transporting and storing gas cylinders used in manufacture or other cylindrical containers containing liquids and gases to be carefully handled. The method enables lifting a container circular of its cross-section off its base by elastic tensioning and carrier elements, such as straps, whereby it is not exposed to external impacts.

In an advantageous embodiment of the method according to the invention the frames are plates. In the method on the sides of a cylinder are set plates of substantially rectangular shape in connection with which there are elastic tensioning means and carrier means. The tensioning means are arranged in relation to the cylinder such that, when tensioning them by a sufficient force, they pull the plates together. At the same time, the cylinder rises by means of the carrier means off its base. The rising of the cylinder off its base is assisted by the so-called pulley phenomenon in which the weight of the object self-operatedly intensifies the operation of the mechanism formed by the tensioning and carrier means and the plates of rectangular shape. To implement this pulley phenomenon, the dimensions of said mechanism are chosen suitable for each purpose of use. When further tensioning the tensioning means, the plates on the sides of the cylinder are closely tensioned against the housing of the cylinder, thus creating a non-rotatable unit. On the edges of the plates on the sides are arranged openings in which the lifting means, such as lifting straps or fork trucks, can be fitted.

An apparatus according to the invention includes frames set on the sides of a cylindrical object and elastic tensioning and carrier means tensioning these frames into connection with the object, which means are arranged to pass below the object and through openings in the frames, the first openings of which are located at a desired distance from the edge of the frame, which distance is practically equal to a desired height of the cylindrical object from a base, and the second opening is substantially above the centre line of the cylinder in the vertical direction, the device being in the operating position.

An advantageous embodiment of the apparatus according to the invention the frames are plates. The apparatus includes plates of substantially rectangular shape set on the sides of the cylindrical object, the plates having a length substantially shorter than the length of the cylindrical object and having a width substantially smaller than the diameter of the cylindrical object. In connection with the plates, there are elastic tensioning means, such as straps, ropes or equivalents, which are set to pass through the openings in the plates and around the whole device. Between the plates, there are also carrier elements, such as straps, which are fitted to the plates such that the cylindrical object is carried by them when tensioning the tensioning means. The plates, the cylindrical object between them and the tensioning means and carrier means tensioning the unit together form a non-rotatable unit which can be handled in a versatile way and located with other equivalent ones side by side or on top of each other. In the plates are arranged openings for lifting auxiliary means, notches facilitating the handling and, if required, notches and other auxiliary means e.g. for mounting transport auxiliary means, such as wheels.

Some advantageous embodiments of the invention are described in the dependent claims.

Next, the invention will be described in detail by means of some advantageous embodiments and with reference to the enclosed drawings.
Fig. 1 shows an oblique top view of an apparatus implementing a method according to the invention before mounting the device.
Fig. 2 shows an oblique top view of an apparatus implementing the method according to the invention the device mounted to a cylindrical object.
Fig. 3 shows an end and partially cut view of an apparatus implementing the method according to the invention.
Fig. 4 shows an apparatus implementing the method according to the invention in which transport wheels are being mounted.
Fig. 5 shows an apparatus implementing the method according to the invention in which transport wheels have been mounted.
Fig. 6 shows an end and partially cut view of an apparatus implementing the method according to the invention, in which device, the cylindrical object is supported by carrier means and tensioning means.
Fig. 7 shows an end and partially cut view of an apparatus implementing the method according to the invention, in which device, the cylindrical object is supported by means of the carrier means and the tensioning means passing around its housing.

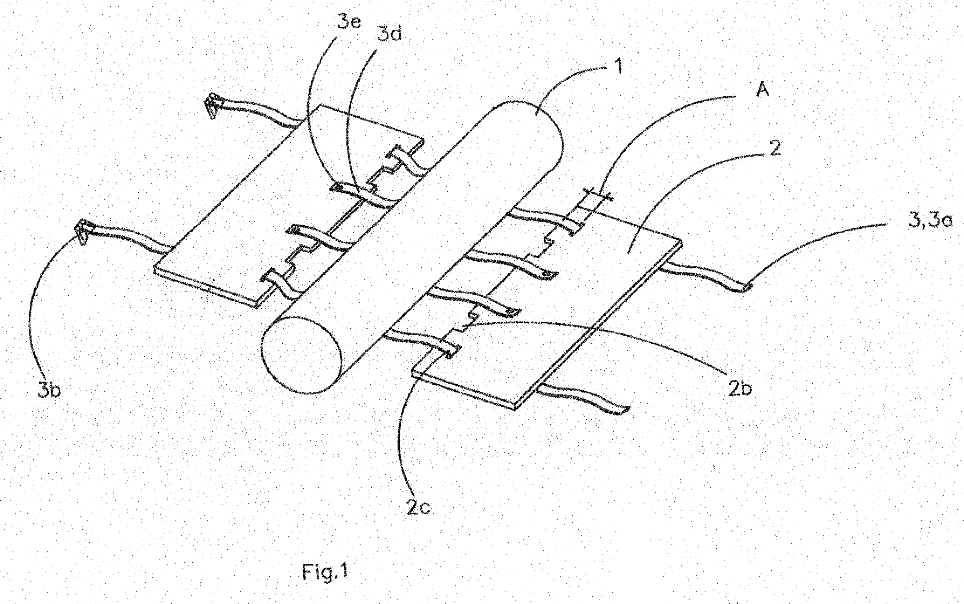

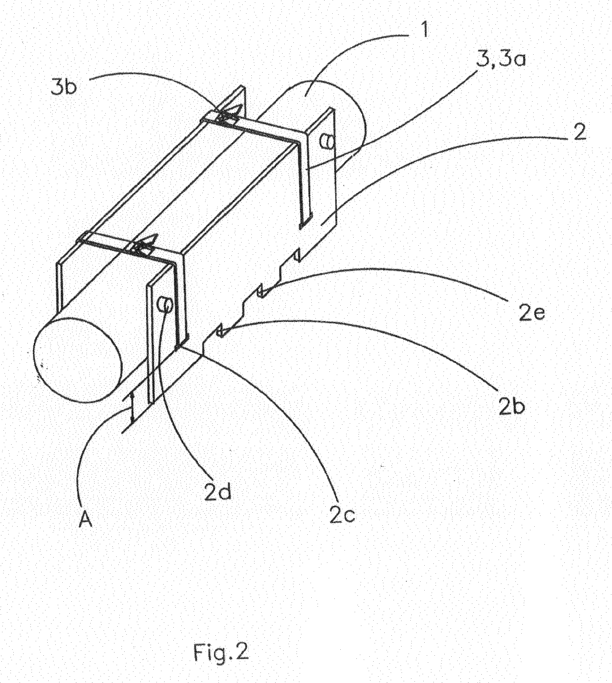

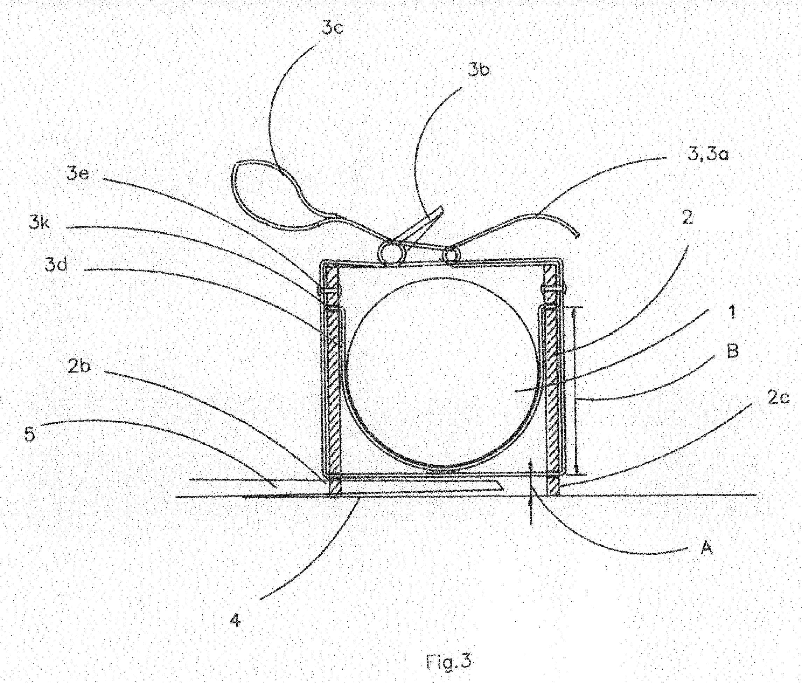

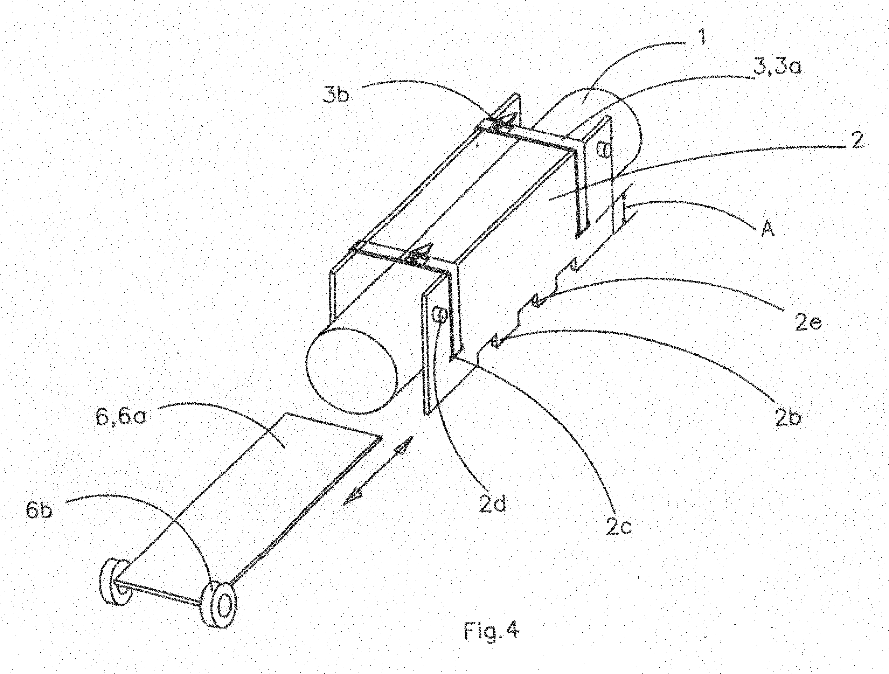

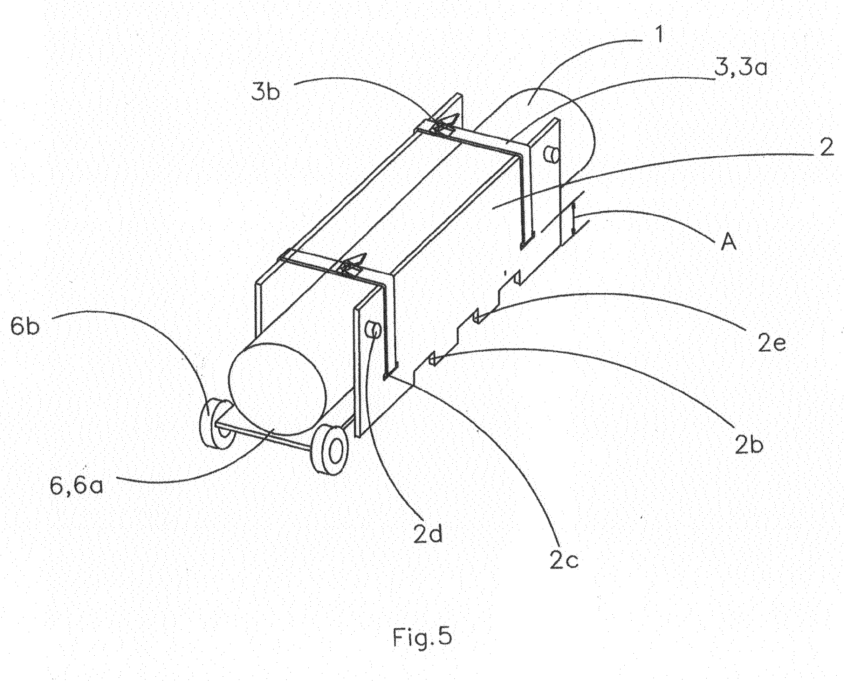

Figs. 1-7 show an apparatus implementing a method according to the invention. The device includes frames 2 set on the sides of a cylindrical object 1, tensioning and carrier means 3 tensioning them into connection with the object and transport wheels 6 with their mounting means.

The frames 2 in an advantageous embodiment are of substantially rectangular shaped plates, and their frames 2 are most advantageously of light and bending-stiff material, such as plywood. On the edge of the frames 2 are arranged notches 2b for lifting auxiliary means, such as lifting straps and fork trucks 5. If required, the frames include supports 2d, most advantageously manufactured of rubber or plastic mixture, which form support points when the device is mounted e.g. against a wall of a cargo space. On the edges of the frames are also arranged notches 2e by means of which the device can be lowered supported by the edge of a cargo space, such as the edge of a pickup truck, in connection with loading by manual force.

The tensioning and carrier means 3 advantageously consist of a tie-down strap 3a which is arranged to pass below the object 1 and through elongated openings 2c in the frames 2. The openings 2c are located at a desired distance A from the edge of the frame 2, which distance is practically equal to the desired height of the cylindrical object from a base 4. The distance A should be large enough in order to cater for the stretching of the tensioning and carrier means, whereby the object 1 cannot be lowered too low. There should also be enough room for lifting auxiliary means, such as truck forks. In connection with the tie-down strap, there is a ratchet tensioner 3b by which the tie-down strap is tensioned to a desired tension. Into connection with the tie-down strap is arranged a carrying loop 3c to facilitate the handling of the device.

Between the frames 2 are arranged carrier means 3d likewise manufactured of tie-down strap which are mounted to the frames by mounting elements 3e. The length of the carrier means 3d and the locations of their mounting elements 3e are chosen such that the cylindrical object remains supported by them in the operating position of the device. The carrier means can be separate and be mounted to their own mounting points 3e or they can be integrated into connection with the tie-down strap 3a, whereby they are arranged to pass through second openings 3k in the frames. The distance of the mounting points 3e or the second openings 3k from the first openings 2c (distance B) is substantially larger than a half of the diameter of the cylindrical object 1 in the vertical direction when the device is in the operating position. That is, the opening 3k is substantially above the centre line off the cylinder.

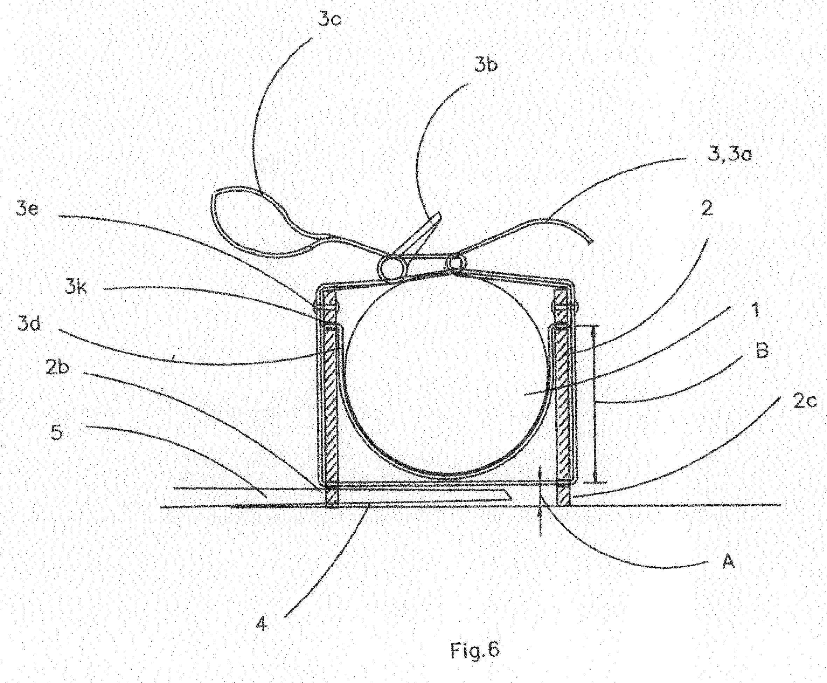

In an advantageous embodiment shown in Fig. 6, the cylindrical object 1 is tied by both the carrier means 3d and the tie-down strap 3a in which there is the tensioning means 3b. Then, the carrier means 3d rest on the cylinder from below and the tie-down strap 3a rests on the cylinder from above, whereby the cylinder is tied in place both from above and below.

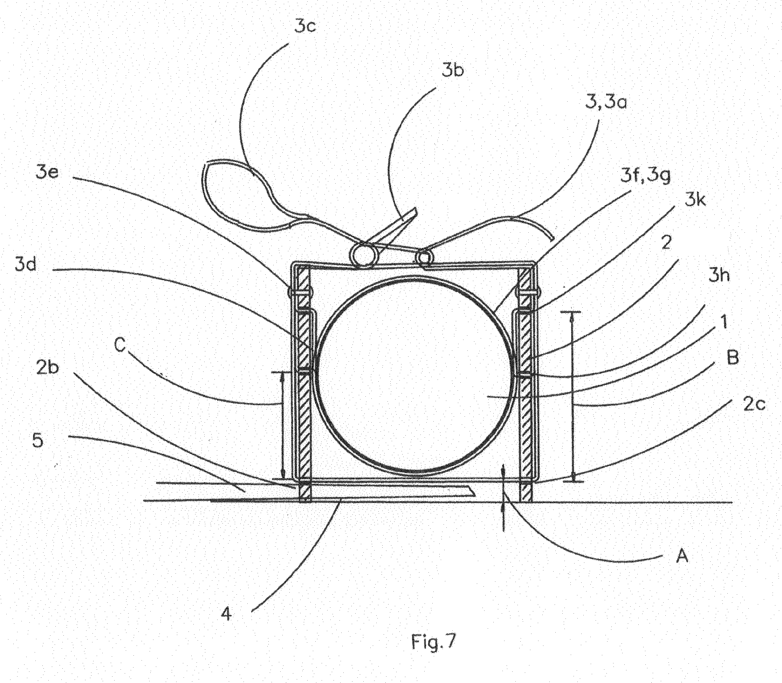

In an advantageous embodiment shown in Fig. 7, the cylindrical object 1 is tied by both the carrier means 3d and a tensioning strap 3f in which there is a tensioning means 3g. Then, the carrier means 3d rest on the cylinder from below and the tensioning strap 3f rests on the cylinder from above, whereby the cylinder is tied in place from an area extending around the whole cylinder. The tensioning strap 3f is arranged to pass through openings 3h in the frames 2a. The distance of the openings 3h from the openings 2c (distance C) is substantially a half of the diameter of the cylindrical object 1 in the vertical direction when the device is in the operating position. That is, the opening 3h is substantially in the centre line of the cylinder 1.

The transport wheels 6 consist of a mounting plate 6a into connection with which are arranged wheels 6b. The mounting plate 6a is tensioned in place either by its own tensioning straps (not shown in the figures) or by the tie-down strap 3a.

The device implementing the method according to the invention operates in the following way. In the initial situation, the frames 2 lie on the base 4 and the cylinder 1 can be rolled or pushed on top of the carrier elements 3d between the frames 2. After this, the tensioning and carrier means 3 tension the plates around the cylinder such that the plates rise of their outer edges from the base 4 and set around the cylinder. At the same time, the carrier means 3d lift the cylinder at a desired height. For each cylinder size, the tensioning and carrier means are such dimensioned and mounted to the plates that the plates will set in a correct way around the cylinder. When tensioning occurs, the cylinder rises off its base and sets itself supported by these two plates, thus becoming non-rotatable. The plates are shaped such that it is possible to push under the cylinder e.g. truck forks 5 or lifting straps and thus to lift the package to a transport vehicle.

It is characteristic of the device implementing the method that the same device can handle objects of various diameters. Because the carrier elements 3d always rotate about half a cycle around the cylinder, the cylinder 1 rises from its base supported by the frames 2 practically almost totally irrespective of the diameter of the cylinder. Due to this, only a few device sizes can cover a relatively large range of diameters of cylindrical objects.

If desiring to move the device manually e.g. indoors in an industrial hall, it is possible to mount the transport wheels 6 to the device. The mounting plate 6a included in the transport wheels is mounted by the tensioning means 3 to the device, after which, the device can be pushed supported by the wheels 6b being in connection with the mounting plate. In an advantageous embodiment of the invention, transport wheels readily bearing-mounted to a shaft are arranged into connection with the device by locking the shaft in the notches in the frame 2 by a suitable tensioning means (not shown in the figures).

The device implementing the method according to the invention can be used for positioning pipes to be welded together. Then, the ends of the pipe are set between the frames 2 and by tensioning with the tensioning and carrier means 3, of which there can be several in this case, the height of the pipes is adjusted as desired. Positioning long pipes can require using several devices.

In an advantageous embodiment of the invention, the width of the frames 2 is substantially larger than the diameter of the cylindrical object 1, which enables locating non-rotatable units according to the method sturdily on top of each other and side by side. If there is no need for positioning on top of each other, the width of the frames 2a can also be smaller than the diameter of the cylindrical object 1.

The figures and the description related to them are only intended to illustrate the present invention. Of its details, the method and the device for implementing the method can vary within the scope of the enclosed claims It is evident to those skilled in the art that the technical arrangements of the device can vary depending on their purpose of use. It is evident to those skilled in the art that the idea of the invention can be applied in handling various cylindrical objects. The embodiment of the invention can vary in accordance with conditions of use and customer requirements and within the scope of arrangements implemented in connection with production.

## Claims

1. A method for handling cylindrical objects (1) in which on the sides of the cylindrical object (1) frames (2) are set in connection with which there are elastic tensioning and carrier means (3), and the tensioning and carrier means having been arranged in relation to the cylinder such that, when tensioning them by a sufficient force, the tensioning means (3) pull the frames (2) together,
**characterised in that**
at the same time when the tensioning and carrier means (3) pull the frames (2) together the cylinder rises by means of the tensioning and carrier means (3) off the use on which it rests and, when further tensioning the tensioning and carrier means (3), the frames (2) on the sides of the cylinder are closely tensioned against the housing of the cylinder, thus forming a non-rotatable unit.

2. An apparatus implementing the method according to claim 1, the apparatus includes frames (2) set on the sides of the cylindrical object (1) and elastic tensioning and carrier means (3) tensioning these frames (2) into connection with the object, and that the tensioning and carrier means (3) are arranged to pass below the object (1),
**characterised in that**
at the same time the tensioning and carrier means (3) are arranged to pass through openings (2c) in the frames (2), which openings (2c) are located at a desired distance (A) from the edge of the frame (2), which distance (A) is practically equal to a desired height of the cylindrical object from a base (4).

3. An apparatus according to claim 2, **characterised in that** the carrier means (3) are arranged to pass below the object (1) and through openings (2c) and (3k) in the frames (2) and that the second opening (3k) is substantially above the centre line of the cylinder in the vertical direction when the device is in the operating position.

4. An apparatus according to claim 2 or 3, **characterised in that** the frames (2) are of substantially rectangular shape and on the edge of their frames (2) are arranged notches (2b) for lifting auxiliary means, such as lifting straps and truck forks (5), and that the frames (2) include supports (2d) which form support points when mounting the device e.g. against a wall of a cargo space, and that on the edge of the frames (2) are arranged notches (2e) by means of which the device can be lowered e.g. supported by the edge of the cargo space in connection with manual loading.

5. An apparatus according to any one of claims 2-4, **characterised in that** in connection with the device there are transport wheels (6) which consist of a mounting plate (6a) into connection with which are arranged wheels (6b), and that the mounting plate (6a) is tensioned in place either by its own tensioning straps or by a strap (3a).

6. An apparatus according to any one of claims 2-5, **characterised in that** carrier elements (3d) always rotate about half a cycle around the cylinder thus lifting the cylinder (1) from its base supported by the frames (2) practically irrespective of the diameter of the cylinder (1), whereby the same device can handle a wide range of diameters of cylindrical objects.

7. An apparatus according to any one of claims 2-6, **characterised in that** the width of the frames (2) is substantially larger than the diameter of the cylindrical object (1), which enables locating non-rotatable units according to the method sturdily on top of each other and side by side.

8. An apparatus according to any one of claims 2-7, **characterised in that** the tensioning and carrier means (3) consist of the tie-down strap (3a) which is arranged to pass below the object (1) and through the elongated openings (2c) in the frames (2) and around the whole device, and that in connection with the tie-down strap (3a) there is a ratchet tensioner (3b) by which the tie-down strap is tensioned in a desired tension, and that the tensioning and carrier means (3) include the carrier means (3d) likewise manufactured of tie-down strap arranged between the frames (2) which are mounted to the frames by mounting elements (3e), and that the length of the carrier means (3d) and the locations of their mounting elements (3e) are chosen such that the cylindrical object remains supported by them in the operating position of the device, and that the carrier means (3d) can be separate and be mounted in their own mounting points (3e) or they can be integrated into connection with the tie-down strap (3a), whereby they are arranged to pass through the openings (3k) in the frames.

9. An apparatus according to claim 8, **characterised in that** the cylindrical object (1) is tied by both the carrier means (3d) and the tie-down strap (3a) which includes the tensioning means (3b), and that the carrier means (3d) rest on the cylinder from below and the tie-down strap (3a) rests on the cylinder from above, thus tying the cylinder in place both from above and from below.

10. An apparatus according to claim 8 or 9, **characterised in that** the cylindrical object (1) is tied by both the carrier means (3d) and the tie-down strap (3f) which includes a tensioning means (3g), and that the carrier means (3d) rest on the cylinder from below and the tie-down strap (3f) rests on the cylinder from above, thus tying the cylinder in place in an area extending around the whole cylinder, and that a tensioning strap (3f) is arranged to pass through openings (3h) in the frames (2), which openings (3h) are substantially in the centre line of the cylinder (1) in the vertical direction when the device is in the operating position.

## Patentansprüche

1. Verfahren zum Fördern von zylindrischen Gegenständen (1), bei welchem an den Seiten des zylindrischen Gegenstands (1) Rahmen (2) in Verbindung mit elastischen Spann- und Tragmitteln (3) vorgesehen sind und die Spann- und Tragmittel in Bezug zum Zylinder so angeordnet sind, dass die Spannmittel (3), wenn sie mit ausreichender Kraft gespannt werden, die Rahmen (2) zusammenziehen,
**dadurch gekennzeichnet, dass**
gleichzeitig, wenn die Spann- und Tragmittel (3) die Rahmen (2) zusammenziehen, der Zylinder mittels der Spann- und Tragmittel (3) von der Basisfläche, auf der er aufliegt, abhebt und, wenn die Spann- und Tragmittel (3) weiter gespannt werden, die Rahmen (2) an den Seiten des Zylinders eng am Gehäuse des Zylinders verspannt werden, so dass sie eine nicht drehbare Einheit bilden.

2. Vorrichtung, die das Verfahren nach Anspruch 1 realisiert, umfassend Rahmen (2), die an den Seiten des zylindrischen Gegenstands (1) vorgesehen sind, und elastische Spann- und Tragmittel (3), die diese Rahmen (2) in Verbindung mit dem Gegenstand spannen, und wobei die Spann- und Tragmittel (3) so angeordnet sind, dass sie unter den Gegenstand (1) fahren,
**dadurch gekennzeichnet, dass**
die Spann- und Tragmittel (3) gleichzeitig so angeordnet sind, dass sie die Öffnungen (2c) in den Rahmen (2) durchlaufen, wobei die Öffnungen (2c) in einem gewünschten Abstand (A) zur Kante des Rahmens (2) angeordnet sind, wobei der Abstand (A) praktisch gleich einer gewünschten Höhe des zylindrischen Objekts über einer Basisfläche (4) ist.

3. Vorrichtung nach Anspruch 2, **dadurch gekennzeichnet, dass** die Tragmittel (3) so angeordnet sind, dass sie unter den Gegenstand (1) fahren und die Öffnungen (2c) und (3k) in den Rahmen (2) durchlaufen und dass die zweite Öffnung (3k) sich in vertikaler Richtung im Wesentlichen oberhalb der Mittellinie des Zylinders befindet, wenn die Vorrichtung in Betriebsposition ist.

4. Vorrichtung nach Anspruch 2 oder 3, **dadurch gekennzeichnet, dass** die Rahmen (2) eine im Wesentlichen rechteckige Form aufweisen und an der Kante der Rahmen (2) Auskerbungen (2b) für Hebehilfsmittel wie Hebegurte und Staplergabeln (5) angeordnet sind, und dass die Rahmen (2) Halterungen (2d) aufweisen, die Halterungspunkte ausbilden, wenn die Vorrichtung z. B. an einer Wand eines Frachtraums montiert wird, und dass an der Kante der Rahmen (2) Auskerbungen (2e) angeordnet sind, mittels welcher die Vorrichtung abgesenkt werden kann, z. B. gestützt durch die Kante des Frachtraums in Verbindung mit manueller Beladung.

5. Vorrichtung nach einem der Ansprüche 2 bis 4, **dadurch gekennzeichnet, dass** in Verbindung mit der Vorrichtung Transporträder (6) vorgesehen sind, die aus einer Montageplatte (6a) bestehen, in Verbindung mit welcher Räder (6b) angeordnet sind, und dass die Montageplatte (6a) entweder durch eigene Spanngurte oder durch einen Gurt (3a) ortsfest verspannt wird.

6. Vorrichtung nach einem der Ansprüche 2 bis 5, **dadurch gekennzeichnet, dass** Tragelemente (3d) jeweils etwa einen Halbzyklus des Zylinders umlaufen und damit den Zylinder (1) aus seiner von den Rahmen (2) gestützten Basisfläche praktisch unabhängig vom Durchmesser des Zylinders (1) herausheben, wodurch die gleiche Vorrichtung einen breiten Bereich von Durchmessern zylindrischer Gegenstände handhaben kann.

7. Vorrichtung nach einem der Ansprüche 2 bis 6, **dadurch gekennzeichnet, dass** die Breite der Rahmen (2) im Wesentlichen größer als der Durchmesser des zylindrischen Gegenstands (1) ist, wodurch es möglich ist, verfahrensgemäße nicht drehbare Einheiten stabil übereinander und nebeneinander anzuordnen.

8. Vorrichtung nach einem der Ansprüche 2 bis 7, **dadurch gekennzeichnet, dass** die Spann- und Tragmittel (3) aus dem Zurrgurt (3a) bestehen, der so angeordnet ist, dass er unter den Gegenstand (1) und durch die länglichen Öffnungen (2c) der Rahmen (2) und rund um die gesamte Vorrichtung verläuft, und dass in Verbindung mit dem Zurrgurt (3a) ein Ratschenspanner (3b) vorgesehen ist, durch den der Zurrgurt in eine gewünschte Spannung versetzt wird, und dass die Spann- und Tragmittel (3) die Tragmittel (3d) umfassen, die gleichweise aus einem zwischen den Rahmen befindlichen Zurrgurt bestehen und über Montageelemente (3e) am Rahmen (2) montiert sind, und dass die Länge der Tragmittel (3d) und die Einbauorte ihrer Montageelemente (3e) so gewählt sind, dass der zylindrische Gegenstand in der Betriebsstellung der Vorrichtung durch diese gehaltert bleibt, und dass die Tragmittel (3d) separat und an ihren eigenen Montagepunkten (3e) montiert sein können oder dass sie in Verbindung mit dem Zurrgurt (3a) integriert sein können, wodurch sie so angeordnet sind, dass sie die Öffnungen (3k) in den Rahmen durchlaufen.

9. Vorrichtung nach Anspruch 8, **dadurch gekennzeichnet, dass** der zylindrische Gegenstand (1) durch sowohl die Tragmittel (3d) als auch den das Spannmittel (3b) aufweisenden Zurrgurt (3a) festgezurrt wird, und dass die Tragmittel (3d) von unten her am Zylinder anliegen und der Zurrgurt (3a) von oben her am Zylinder anliegt, wodurch der Zylinder sowohl von oben als auch von unten ortsfest fixiert wird.

10. Vorrichtung nach Anspruch 8 oder 9, **dadurch gekennzeichnet, dass** der zylindrische Gegenstand (1) durch sowohl die Tragmittel (3d) als auch den ein Spannmittel (3g) umfassenden Zurrgurt (3f) festgezurrt wird, und dass die Tragmittel (3d) von unten her am Zylinder anliegen und der Zurrgurt (3f) von oben her am Zylinder anliegt, wodurch der Zylinder in einem den gesamten Zylinder umlaufenden Bereich ortsfest fixiert wird, und dass ein Spanngurt (3f) so angeordnet ist, dass er durch die Öffnungen (3h) in den Rahmen (2) verläuft, wobei die Öffnungen (3h) sich in vertikaler Richtung im Wesentlichen in der Mittellinie des Zylinders (1) befinden, wenn die Vorrichtung in der Betriebsstellung ist.

## Revendications

1. Procédé de manutention d'objets cylindriques (1) dans lequel des cadres (2), en liaison avec lesquels il y a des moyens tendeurs et porteurs (3), sont prévus sur les côtés de l'objet cylindrique (1) et lesdits moyens tendeurs et porteurs ont été disposés par rapport au cylindre de sorte que les moyens tendeurs (3), quand on les met en tension avec une force suffisante, resserrent les cadres (2),
***caractérisé* en ce que**
en même temps que les moyens tendeurs et porteurs (3) resserrent les cadres (2), le cylindre se soulève par l'action des moyens tendeurs et porteurs (3) au-dessus de la base sur laquelle il repose, et, lorsque les moyens tendeurs et porteurs (3) continuent d'être serrés, les cadres (2) sur les côtés du cylindre sont plaqués étroitement contre le boîtier du cylindre de manière à former une unité non rotative.

2. Dispositif réalisant le procédé selon la revendication 1, ledit dispositif comprenant des cadres (2) prévus sur les côtés de l'objet cylindrique (1) et des moyens tendeurs et porteurs (3) serrant lesdits cadres (2) en liaison avec l'objet, et lesdits moyens tendeurs et porteurs (3) étant disposés de sorte qu'ils passent sous l'objet (1),
***caractérisé* en ce que**
en même temps, lesdits moyens tendeurs et porteurs (3) sont disposés de sorte qu'ils passent à travers des ouvertures (2c) dans les cadres (2), lesdites ouvertures (2c) étant disposées à une distance (A) désirée du bord du cadre (2), ladite distance (A) étant pratiquement égale à une hauteur désirée de l'objet cylindrique à partir d'une base (4).

3. Dispositif selon la revendication 2, ***caractérisé* en ce que** les moyens porteurs (3) sont disposés de sorte qu'ils passent sous l'objet (1) et à travers des ouvertures (2c) et (3k) dans les cadres (2), et que la deuxième ouverture (3k) est située essentiellement au-dessus de l'axe central du cylindre en sens vertical lorsque le dispositif est dans la position de fonctionnement.

4. Dispositif selon la revendication 2 ou 3, ***caractérisé* en ce que** les cadres (2) présentent une forme essentiellement rectangulaire et des encoches (2b) pour des moyens de levage auxiliaires tels que sangles de levage et fourches de chariot (5) sont disposées au bord des cadres (2), et que les cadres (2) comprennent des appuis (2d) formant des points d'appui lors du montage du dispositif par exemple sur un mur d'un espace de chargement, et qu'au bord des cadres (2) sont disposées des encoches (2e) au moyen desquelles on peut abaisser le dispositif, par exemple appuyé par le bord de l'espace de chargement en liaison avec un chargement manuel.

5. Dispositif selon l'une des revendications 2 à 4, ***caractérisé* en ce qu'**il y a des roues transporteuses (6) liées au dispositif qui sont constituée d'une plaque de montage (6a) avec des roues (6b) disposées en liaison avec elle, et que ladite plaque de montage (6a) est fixée en place soit par ses propres sangles de mise en tension, soit par une sangle (3a).

6. Dispositif selon l'une des revendications 2 à 5, ***caractérisé* en ce que** des éléments porteurs (3d) enveloppent chaque fois environ un demi-cycle du cylindre et, par-là, soulèvent le cylindre (1) au-dessus de la base appuyée par les cadres (2), pratiquement indépendamment du diamètre du cylindre (1), grâce à quoi le même dispositif est capable de manutentionner une large gamme de diamètres d'objets cylindriques.

7. Dispositif selon l'une des revendications 2 à 6, ***caractérisé* en ce que** la largeur des cadres (2) est essentiellement supérieure au diamètre de l'objet cylindrique (1), ce qui permet de disposer des unités non rotatives selon le procédé de manière stable les unes au-dessus des autres et à côté des autres.

8. Dispositif selon l'une des revendications 2 à 7, ***caractérisé* en ce que** les moyens tendeurs et porteurs (3) sont constitués de la sangle d'arrimage (3a) qui est disposée de sorte qu'elle passe sous l'objet (1) et à travers les ouvertures oblongues (2c) dans les cadres (2) et autour du dispositif entier, et qu'en liaison avec la sangle d'arrimage (3a) il y a un tendeur à cliquet (3b) grâce auquel la sangle d'arrimage est serrée pour une tension désirée, et que les moyens tendeurs et porteurs (3) comprennent les moyens porteurs (3d) également faits d'une sangle d'arrimage disposée entre les cadres (2) et montés sur le cadre par des éléments de montage (3e), et que la longueur des moyens porteurs (3d) et les emplacements de leurs éléments de montage (3e) sont choisis de sorte que, dans la position de fonctionnement du dispositif, l'objet cylindrique reste appuyé par eux, et que les moyens porteurs (3d) peuvent être séparés et montés à leurs propres points de montage (3e) ou ils peuvent être intégrés en liaison avec la sangle d'arrimage (3a), grâce à quoi ils sont disposés de sorte qu'ils passent à travers les ouvertures (3k) dans les cadres.

9. Dispositif selon la revendication 8, ***caractérisé* en ce que** l'objet cylindrique (1) est arrimé tant par les moyens porteurs (3d) que par la sangle d'arrimage (3a) comprenant le moyen tendeur (3b), et que les moyens porteurs (3d) appuient le cylindre par le bas et la sangle d'arrimage (3a) appuie le cylindre par le haut, grâce à quoi le cylindre est arrimé en place tant par le haut que par le bas.

10. Dispositif selon la revendication 8 ou 9, ***caractérisé* en ce que** l'objet cylindrique (1) est arrimé tant par les moyens porteurs (3d) que par la sangle d'arrimage (3f) comprenant un moyen tendeur (3g), et que les moyens porteurs (3d) appuient le cylindre par le bas et la sangle d'arrimage (3f) appuie le cylindre par le haut, grâce à quoi le cylindre est arrimé en place dans une zone s'étendant autour du cylindre entier, et qu'une sangle d'arrimage (3f) est disposée de sorte qu'elle passe à travers des ouvertures (3h) dans les cadres (2), lesdites ouvertures (3h) étant situées essentiellement dans l'axe central du cylindre (1) en sens vertical, lorsque le dispositif est dans la position de fonctionnement.
